Europäisches Patentamt

European Patent Office (11) Publication number: **0 172 357**

Office européen des brevets **A2**

(12) **EUROPEAN PATENT APPLICATION**

(21) Application number: **85107787.5**

(51) Int. Cl.⁴: **G 06 F 15/40**

(22) Date of filing: **24.06.85**

(30) Priority: **28.06.84 JP 97269/84 U**
**10.12.84 JP 187090/84 U**

(43) Date of publication of application:
**26.02.86 Bulletin 86/9**

(84) Designated Contracting States:
**AT BE CH DE FR GB IT LI NL SE**

(71) Applicant: **Akiyama, Yoshiro**
**No. 26-4, Kugahara 5-chome**
**Ohta-ku Tokyo(JP)**

(72) Inventor: **Akiyama, Yoshiro**
**No. 26-4, Kugahara 5-chome**
**Ohta-ku Tokyo(JP)**

(74) Representative: **Schmidt, Horst, Dr.**
**Patentanwälte Pohlmann & Schmidt Siegfriedstrasse 8**
**D-8000 München 40(DE)**

(54) **Display type dictionary apparatus.**

(57) A display-type dictionary apparatus includes a letter signal generator (1). The letter signal generator generates letter signals which correspond to the input letters. A letter/page converter (2) is provided for converting the letter signals into a predetermined page. The contents of the predetermined page are displayed on a screen (4) through a page recorder (3) for storing pages. The display-type dictionary apparatus permits to display instantaneously the content of each page in response to a word or indexing word.

EP 0 172 357 A2

./...

FIG. 1

TITLE OF THE INVENTION

## DISPLAY TYPE DICTIONARY APPARATUS

BACKGROUND OF THE INVENTION

The present invention relates to a display type dictionary apparatus having a recording means such as a microfilm, floppy disc, optical disc file or the like which records and stores the contents of each page of a document such as a dictionary or an encyclopedia which contains words arranged alphabetically, in the order of the Japanese syllabary or another suitable order. The apparatus further has word inputting key means and a screen-type display means. In operation, the content of any desired page of the document is displayed for the user's inspection on the display means as the page is designated through the key means.

The present invention also relates to a display type dictionary apparatus which permits an access to the desired page by means of the content of description in each page of a dictionary or an encyclopedia (referred to simply as "dictionary", hereinunder).

Using a dictionary involves troublesome work of turning the leaves back and forth to find the desired word while comparing the spelling of the word with those of other similarly-spelled words which are arranged in a predetermined order. This work is quite time-consuming, although the required time depends on the degree of mastery.

Recently, a device called a "word translator" has been developed and sold in which, for example, equivalent words in one language are displayed in response to inputting of the characters of words in another language. This word translator, however, displays only the translated (equivalent) words. In using of a dictionary or a encyclopedia, it is preferable that the user can see not only the meaning of the word in question but also other information such as illustrations or pictures, explanation, derivatives, idioms or related words, and so forth. From this point of view, it would be very helpful if the content of each page were displayed instantaneously in response to the inputting of a word.

SUMMARY OF THE INVENTION

It is, therefore, an object of the invention to provide a display type dictionary apparatus in which the content of each page is displayed instantaneously in response to a word or an indexing word.

In one aspect, in accordance with the present invention, there is provided a display-type dictionary apparatus comprising: letter signal generating means having keys for inputting desired letters and for generating letter signals corresponding to the inputted letters; letter/page converting means for converting said letter signals into numerical values which are beforehand determined in accordance with the order of word arrangement in a dictionary, and for converting the numerical values into

0172357

predetermined page designating signals; page recording means adapted to produce page content signals representing the contents of pages of said dictionary, in response to said page designating signals; and screen-type display means for displaying the contents of the pages in response to said page signals from said page recording means.

In another aspect, in accordance with the present invention there is provide a display type dictionary apparatus comprising: a keyboard having a multiplicity of character keys and adapted to produce indexing word signals through operation of said keys, said indexing word signals corresponding to a plurality of indexing word which are contained by a dictionary or an encyclopedia or, alternatively, determined beforehand by a user; memory and conversion means which stores page signals in relation to said indexing words and adapted to covert the indexing word signal inputted through said keyboard into corresponding page signal and to output said page signal; picture memory elements storing the content of each page of said dictionary or encyclopedia picture signal in response to said page signal; and display means for displaying the content of said image signal outputted from said picture memory element.

DESCRIPTION OF THE DRAWING

Other objects and advantages of the present invention will become apparent from the following description made with reference to the accompanying drawing in which:

- 3 -

Fig. 1 is a schematic perspective view of an embodiment of the apparatus of the invention.

Fig. 2 is a achematic perspective view of another embodiment of the apparatus of the invention.

## DESCRIPTION OF THE PREFERRED EMBODIMENT

The principle and a practical embodiment of the invention will be described hereinunder.

The principle of the invention is as follows. Needless to say, in dictionaries and encyclopedias, words are arranged in a predetermined order. For instance, in a dictionary containing words constituted of alphabetic letters, the word "a" comes first followed by words starting "aa" and then by words starting "ab". In addition, there is a fixed order between any two words. Namely, the word "all" always preceedes the word "alone". According to the invention, when any desired word is spelled by means of letter keys, i.e., when a signal constituted by the letters which form the word is input, a numerical value peculiar to the input is produced. In addition, there is a functional rule that the numerical value corresponding to a word is always greater than the numerical value corresponding to a word which precedes the first-mentioned word in the dictionary.

More specifically, representing the numeral obtained through inputting of "all" by F(all) and the numeral obtained through inputting of "alone" by F(alone), a relationship expressed by F(all) < F(alone) exists without

- 4 -

fail. In the invention, a function Y=F(word) is determined such that the above-mentioned relationship always exists between any two different words. Consequently, the function value successively increases in accordance with the order in which the words appear in the dictionary. This means that each page contains words of a predetermined range of function values.

According to the invention, therefore, a digital output "p" is obtained in response to the inputting of words which satisfy the following conditions:

$$F(p-1) < Yp \leq F(p) \qquad \text{on condition of } 2 \leq p$$
$$Y(1) \leq F(1) \qquad \text{on condition of } p = 1$$

where,

Yp: function value obtained when the last word appearing on the p-th page is input;

F(p-1): function value obtained when the last word appearing on (p-1)th page is input.

The invention will be more fully understood from the following description of an embodiment.

The program of the apparatus of the invention is arranged to numericalize the word to be found, i.e., the inputted elementary signals, and establishes a functional rule such that the function values Y corresponding to different words are increased or descreased in accordance with the order of arrangement of words in a dictionary, such that the value Y corresponding to a given word is always greater than that of a word preceding the given word. A practical example of such a program will be shown below.

For simplification of explanation, assume here a dictionary which contains only four-character words composed from only 9 (nine) alphabetic letters a,b,c,d,e,f,g,h and i.

In this embodiment, the letters a,b,c,d,e,f,g,h and i are represented by numerals 1,2,3,4,5,6,7,8 and 9 respectively. Then, the word "abed" is expressed numerically as 1,2,5,4, while the word "acid" is expressed as 1,3,9,4. The numeral in the first place is multiplied by $10^3$, the numeral in the second place is multiplied by $10^2$, the numeral in the third place is multiplied by 10, and the numeral in the fourth place is multiplied by $10^0$. The sums of the results of multiplication, given as numerical values 1254 and 1394, represent and identify the words "abed" and "acid", respectively, and show the order of these words in the arrangement of the words in the dictionary.

Thus, all words composed of four characters from the 9 (nine) alphabetic letters can be replaced by numerical values having four digits or places. These numerical values also express the order of these words in the word arrangement of the dictionary.

This basic concept applies also to the case where the dictionary contains the words composed of 1 (one) to 3 (three) characters from the 9 (nine) letters. Namely, in the case of a word composed of 3 (three) characters, the first, second and third letters are represented by the numerals mentioned before, while 0 (zero) is used for representing the fourth place. Similarly, in case of a word having 2 (two) characters, 0 (zero) is used for representing the third and fourth places and, in case of a word composed of only one character 0 (zero) is used for the second, third and the fourth places. Thus, the word "a" is expressed by 1000.

By numericalizing the words in accordance with the above-explained rule, all of the words contained in the dictionary are identified by corresponding numerals which range between 1000 and 9999.

According to the rule explained above, the group of words contained on each page of the dictionary is reduced to a group of numerals arranged in a fixed order.

In the apparatus of the invention, therefore, a digital value "1", representing the first page, is alloted to all words which are represented by numerals between 1000 and a certain numeral e.g., 1200 when the last word appearing in the first page is "ab". Similarly, a digital value "2" representing the second page is alloted to all of the words corresponding to a second group of numerals. In this manner, the apparatus of the invention is beforehand arranged such that a digital value "p" is alloted to the words corresponding to a group of numerals which satisfy the following condition:

$$F(p-1) < Y \leq F(p)$$

Needless to say, this arrangement must correspond to the arrangement of the words in the dictionary.

In the case of an ordinary dictionary containing words composed of 26 alphabetic letters, the principle explained hereinbefore applies, although the arrangement is somewhat more complicated than in the case of words composed from 9 letters as described by way of example above. Namely, in the case of an ordinary dictionary, numerals are used for representing the alphabetic letters, i.e. as "1" for "a", "2" for "b", and so up to "26" for "z". Experience shows, however, that ordinary words contained by a dictionary can be identified almost perfectly by the first to sixth letters constituting the beginning part of each word. That is, very rarely are two words having the same first to sixth letters but different meanings contained on different pages of a dictionary. The function values corresponding to the words composed of 6 (six) or less letters are numerals having 6 (six) digits in accordance with 27 notation.

Practically, however, the spelling of the last word on a page is identical to that of the first word on the next page. Namely, the designation of page by digit signal may involve a 1-page error because it is quite probable that the definition of a word will start at the end of one page and end at the beginning of the next page. According to the invention, therefore, the key means is provided with a function for allowing the user to turn the pages back and forth.

A practical embodiment of the screen display type dictionary apparatus of the invention will be explained hereinunder with reference to the accompanying drawing.

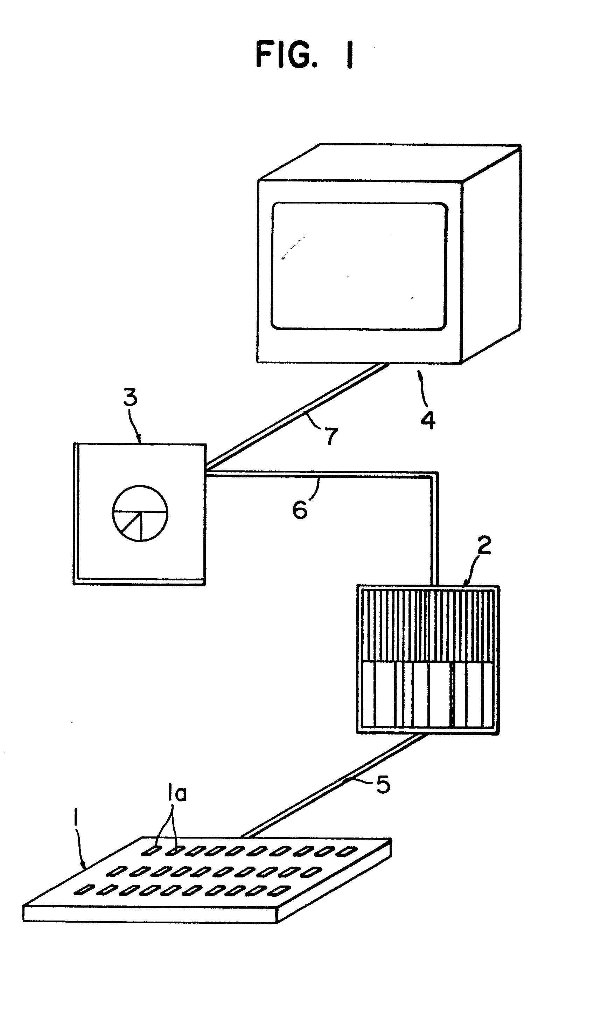

The Fig. 1 is a schematic perspective view of an embodiment of the invention. The apparatus is basically composed of a letter signal generating means (key means) 1, letter/page converting means 2, page recording means 3, and a screen-type display means 4.

The letter signal generating means 1 has a keyboard including keys 1a corresponding to letters such as alphabetic letters or Japanese "hiragana" letters, each key being adapted to generate a particular signal. When the apparatus of the invention is designed to make selective use of two or more dictionaries, the letter signal generating means 1 is provided with keys for selecting the dictionary to be used.

The letter/page converting means 2 is connected through a signal cable 5 to the letter signal generating means. This letter/page converting means includes a means for converting letter signals to corresponding numerical values and a means for converting the numerical values into page designating signals representing the numbers of the pages containing the desired words in the selected dictionary. Thus, the letter/page converting means 2 produces a page designating signal in response to the word input through the key means.

The page recording means 3 is composed of a suitable recording medium such as a microfilm, floppy disc, optical disc file and so forth. The contents of the dictionaries are stored beforehand in such a recording medium in a page-by-page fashion. The page recording means 3 is connected to the letter/page converting means 2 through a signal cable 6, so that it outputs the content of the page designated by the page designating signal from the converting means.

The screen-type display means 4 is connected through a signal cable 7 to the page recording means 3 so that it can display the content of the designated page transmitted from the page recording means 3 through the cable 7.

Needless to say, the aforementioned means 1 to 4 may be constructed as a unit, although they are illustrated as separate units for the simplification of explanation.

As mentioned above, the apparatus illustrated in Fig. 1 which allows a real-time access to the desired page of a dictionary in which indexing words are arranged regularly in accordance with a predetermined order. In some dictionaries, however, the indexing words are not arranged regularly. In such a case, it will be very helpful for the user if he can make access to the desired page by means of a word representing the content of description in such a page or a word pertinent to the description, regardless of the indexing word on each page.

Under these circumstances, the present invention also aims at providing a display type dictionary apparatus in which the content of description in each page a dictionary or a matter pertinent to the description is beforehand registered in the form of a word consisting of characters or letters of a number less than a predetermined number, so that the user can make a quick access to the desired page by means of the registered word and can see the content on a visual display.

The principle of a preferred another embodiment of the invention will be described hereinunder.

Pages of a dictionary can be identified and appointed by means of their own page numbers. According to the invention, suitable words which represent the content of each page or a matter pertinent to the content are selected as indexing words by means of which the page can be accessed. Each indexing word is constituted by letters of a number less than a predetermined number. The arrangement is such that any desired number of indexing words are set for one page, and these indexing words associated with a common page are registered together with a numerical representation representing the common page. With this arrangement, the user can make a quick access to the desired page and to see the content of the page on display, simply by appointing an indexing word through, for example, a keyboard.

An explanation will be made hereinunder as to how the indexing words are set up in relation to the numerical representations.

It is assumed here that the invention is applied to a dictionary worded in Japanese language, and that each indexing word is to be expressed by letters less than 10 (ten), using any one of 48 Japanese basic letters of "i", "ro", "ha", "ni", "ho", "he", "to", ..., "n".

The 48 letters "i", "ro", "ha", "ni",...."n" are represented by numerals "1", "2", "3", "4", ...., "48", respectively. It is assumed here that the indexing word has to be set by 10 or less letters. In case that an indexing word is constituted by 5 (five) letters a numeral "0" (zero) is used to represent the sixth to tenth letters which actually do not exist. Similarly, when the indexing word is constituted by 9 (nine) letters, only the tenth letter which actually does not exist is expressed by "0" (zero). Consequently, each indexing word can be expressd by a train of 10 (ten) numerical values each being one of 0 to 48. For instance, a Japanese word "ha-to" is expressed by a numerical value train "3,7,0,0,0,0,0,0,0,0". By reading this numerical representation by 49-notation code on an understanding that this numerical representation consists of 10 (ten) numerical values, it is possible to appoint the specific indexing word "ha-to". Thus, all different indexing words can have different numerical representations of their own.

This principle can ba applied also to the case of a dictionary worded in English in scuh a manner that indexing words are formed by less than 12 letters, each being any desired one of 26 alphabetic letters. In such a case, each indexing word is expressed by a numerical representation or train consisting of 12 numerical values formed in accordance with 27-notation.

In the embodiment of the invetion, a single indexing word is registered for a plurality of pages so that, when the use appoint this indexing word, the numbers of all pages with which the indexing word is registered are displayed, thereby allowing the user to read these pages one after another.

In the embodiment of the invention, the setting of the indexing words is not made by the user, but the indexing words are determined beforehand and shown in a Table. Therefore, the user can select a suitable indexing word with reference to the Table and can access the desired page by means of the selected indexing word. Such a Table is equivalent to "contents" or "index" which is usually prepared during the edition of the dictionary. The invention, however, does not exclude any allowance for the user to set up additional indexing words of his own for the sake of his convenience. such a modification, of course, falls within the scope of the invention.

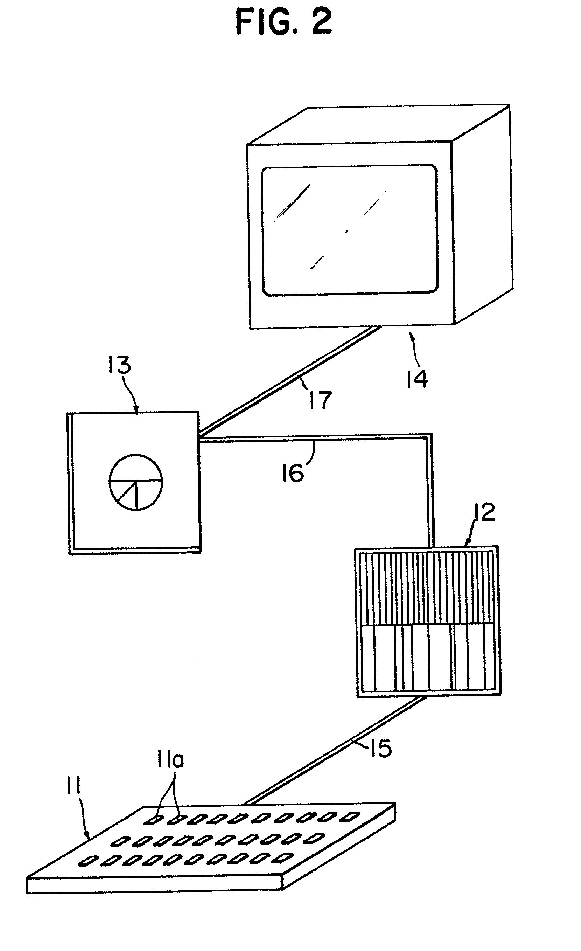

A practical embodiment of the invention will be explained hereinunder, with reference to the attached Fig. 2 which schematically shows a display type dictionary apparatus in accordance with the invention.

The apparatus has a keyboard 11 carrying a multiplicity of keys 11a corresponding to characters such as alphabetic letters, Japanese letters in accordance with the "kana" syllabary, numerals and so forth. When the user inputs selected indexing word by means of the keys 11a in accordance with the spelling of the indexing word, the keyboard 11 produces an electric signal corresponding to the indexing word. This indexing word signals transmitted through a line 15 to memory and conversion means 12 which store informations concerning the relationship between the indexing words and the page numbers, so that the memory and conversion means produce a page signal corresponding to the inputted indexing word signal. The page signal thus produced is transmitted through a line 16 to a picture memory element 13 in which are stored the contents of descriptions in respective pages of the dictionary. Upon receipt of the page signal, the picture memory element outputs a picture signal corresponding to the content of the page identified by the page signal, and transmits the same to display means 14 through a line 17, so that the user can observe the content of the designated page displayed on the display means 14.

The described embodiments of the display type dictionary apparatus of the invention has a function to allow the user to make access to the desired page by means of indexing words. The apparatus of the invention, however, can have a function to permit an access to the desired page by means of an index arranged in accordance with alphabetic order or the Japanese "kana" syllabary.

WHAT IS CLAIMED IS:

1. A display-type dictionary apparatus comprising:

letter signal generating means(1)/ having keys(1a)/ for inputting desired letters and for generating letter signals corresponding to the inputted letters;

letter/page converting means(2)/ for converting said letter signals into numerical values which are beforehand determined in accordance with the order of word arrangement in a dictionary, and for converting the numerical values into predetermined page designating signals;

page recording means(3)/ adapted to produce page content signals representing the contents of pages of said dictionary, in response to said page designating signals; and

screen-type display means(4)/ for displaying the contents of the pages in response to said page signals from said page recording means.

2. A display type dictionary apparatus comprising:

a keyboard(11)/ having a multiplicity of character keys and adapted to produce indexing word signals through operation of said keys, said indexing word signals corresponding to a plurality of indexing words which are contained by a dictionary or an encyclopedia or, alternatively, determined beforehand by a user;

memory and conversion means(12)/ which stores page signals in relation to said indexing words and adapted to covert the

- 15 -

indexing word signal inputted through said keyboad into corresponding page signal and to output said page signal;

(13) picture memory elements/storing the content of each page of said dictionary or encyclopedia corresponding to each page signal and adapted to produce a picture signal in response to said page signal; and

(14) display means/for displaying the content of said image signal outputted from said picture memory element.

# FIG. 1

# FIG. 2